# EUROPÄISCHE PATENTANMELDUNG

(11) **EP 4 782 806 A1**
(43) Veröffentlichungstag der Anmeldung: **29.07.2026**
(21) Anmeldenummer: 25154066.2
(22) Anmeldetag: 27.01.2025
(51) Int. Cl.: G01L 27/00, F16K 11/072

(54) **SCHNELLENTLÜFTUNGS-ADAPTER ZUM TESTEN DER FUNKTIONSFÄHIGKEIT EINES MANOMETERS UND VERFAHREN ZUM ENTLÜFTEN EINES AN EINER ARMATUR ANGEORDNETEN MANOMETERS**

(71) Anmelder: Minimax Viking Patent Management GmbH, 23840 Bad Oldesloe (DE)
(72) Erfinder: Restorff, Heiko, 23840 Bad Oldesloe (DE); Hochschild, Marcus, 23840 Bad Oldesloe (DE)
(74) Vertreter: Eisenführ Speiser

(57) **Zusammenfassung**

Die Erfindung bezieht sich auf einen Schnellentlüftungs-Adapter (10, 10') zum Testen der Funktionsfähigkeit eines Manometers (106), aufweisend ein Anschlussteil (12,12') mit einem Anschlussstutzen (14) zum fluidleitenden Verbinden mit einem unter Druck stehenden Bauteil, wobei der Anschlussstutzen (14) einen Druckeinlass (20) aufweist, und ein am Anschlussteil (12, 12') angeordnetes und relativ zum Anschlussteil (12, 12') bewegbares Manometerteil (16, 16') mit einer Manometer-Schnittstelle (18) zum fluidleitenden Koppeln mit einem Manometer (106). Der Adapter (10, 10') zumindest einen sich vom Druckeinlass (20) in Richtung der Manometer-Schnittstelle (18) erstreckenden Druckkanal (22) und einen sich von der Manometer-Schnittstelle (18) zur Umgebung erstreckenden Entlüftungskanal (24) aufweist, wobei das Manometerteil (16, 16') dazu eingerichtet ist, zwischen einer ersten, den Druckkanal (22) freigebenden Bewegungsstellung (S1) und einer zweiten, den Entlüftungskanal (24) freigebenden Bewegungsstellung (S2) hin- und herbewegt zu werden,
wobei das Manometerteil (16, 16') eine den Druckkanal (22) verschließende Verschlussfläche (39) aufweist, welche in der Bewegungsstellung (S2) in einer durch den Druckkanal (22) am Anschlussteil (12, 12') definierten Anströmrichtung (X) angeströmt wird, und
wobei das Manometerteil (16, 16') entgegen der Anströmrichtung (X) am Anschlussteil (12, 12') abgestützt und in einer Ebene in einem Winkel größer als 70° geneigt, vorzugsweise senkrecht, zur Anströmrichtung (X) bewegbar am Anschlussteil (12) aufgenommen ist.

## Beschreibung

Die Erfindung betrifft einen Schnellentlüftungs-Adapter zum Testen der Funktionsfähigkeit eines Manometers, aufweisend ein Anschlussteil mit einem Anschlussstutzen zum fluidleitenden Verbinden mit einem unter Druck stehenden Bauteil, wobei der Anschlussstutzen einen Druckeinlass aufweist, und ein am Anschlussteil angeordnetes und relativ zum Anschlussteil bewegbares Manometerteil mit einer Manometer-Schnittstelle zum fluidleitenden Koppeln mit einem Manometer oder mit einem Manometer. Des Weiteren betrifft die Erfindung auch eine Armatur, insbesondere ein Feuerlöschanlagenventil, sowie ein Verfahren zum Entlüften eines an einer Armatur angeordneten Manometers unter Verwendung eines Schnellentlüftungs-Adapters.

Schnellentlüftungs-Adapter sind im Stand der Technik bekannt und werden häufig als Zwischenbauteil zwischen beispielsweise einem Druckbehälter und einem daran aufgenommenen Manometer montiert. Um die Funktionsfähigkeit des Manometers überprüfen zu können, wird das Manometer in vorgegebenen Zeitabständen mittels des Schnellentlüftungs-Adapters in einen drucklosen Zustand versetzt. Dazu wird üblicherweise die Druckversorgung zum Manometer unterbrochen und eine Verbindung vom Manometer in Richtung der Umgebung hergestellt.

Aus FR 2 240 446 B1 ist beispielsweise eine Schnelltestarmatur für ein Manometer bekannt, das ein Anschlussteil mit einem Anschlussstutzen zum fluidleitenden Verbinden mit einem Druckbehälter aufweist. Das Manometer ist über eine Druckleitung mit dem Anschlussteil gekoppelt. Entlang eines Abschnitts zwischen einem Druckeinlass am Anschlussteil und dem Manometer ist ein Ventilkörper angeordnet, der mittels eines Betätigungsknopfes betätigt und die Fluidverbindung vom Druckbehälter zum Manometer unterbrochen und eine am Anschlussteil ausgebildete Entlüftungsöffnung freigegeben wird. Mit Freigeben der Entlüftungsöffnung tritt das in der Druckleitung enthaltene Druckmedium in die Umgebung aus. Die Entlüftungsöffnung ist dem Betätigungsknopf so zugeordnet, dass das ausströmende Medium entlang des Betätigungsknopf strömt, was bei einem im Druckbehälter enthaltenen, aggressiven oder hohe bzw. niedrige Temperaturen aufweisenden Medium eine Gefährdung für den Anwender darstellen kann.

Aus CN 2089625 U ist eine Testarmatur bekannt, mittels derer ein in seiner normalen Betriebsstellung druckloses Manometer fluidleitend mit einem unter Druck stehenden Behältnis verbunden wird, um den darin anliegenden Druck zu messen. Die Armatur weist ein Anschlussteil mit einem Anschlussstutzen zum fluidleitenden Verbinden mit dem unter Druck stehenden Behälter auf. Ferner weist die Testarmatur ein relativ zum Anschlussteil bewegbares Manometerteil auf, an dem das Manometer angeordnet ist und welches mittels einer Druckfeder in der normalen Betriebsstellung gehalten wird. Durch Aufbringen einer Druckkraft axial zum Anschlussteil wird das Manometerteil mit dem Manometer zum Anzeigen des im Behälter befindlichen Drucks in eine druckleitende Verbindung überführt. Zum Bewegen des Manometerteils muss jedoch ein Anwender eine Druckkraft auf das Manometer selbst ausüben, was ihn unter Umständen das Ablesen des genauen Drucks am Manometer erschwert.

An beiden vorbeschriebenen Lösungen tritt bzw. kann zudem unter ungünstigen Umständen eine vergleichsweise große Menge des Druckmediums, beispielsweise aus der das Manometer mit der Testarmatur verbindenden Druckleitung bzw. beim Bewegen des Manometerteils in die oder aus der fluidleitenden Verbindung mit dem Druckbehälter, in die Umgebung aus bzw. austreten.

Daher lag der vorliegenden Erfindung die Aufgabe zugrunde, einen Schnellentlüftungs-Adapter aufzuzeigen, mittels dessen das Durchführen der Funktionsprüfung vereinfacht und zuverlässig gestaltet werden kann. Zudem besteht ein Bedarf an einem Schnellentlüftungs-Adapter, an dem beim Drucklossetzen des Manometers die Menge des austretenden Druckmediums so gering wie möglich ist.

Die Erfindung löst die ihr zugrundeliegende Aufgabe gemäß einem ersten Aspekt bei einem Schnellentlüftungs-Adapter zum Testen der Funktionsfähigkeit eines daran aufgenommenen Manometers mit den Merkmalen nach Anspruch 1. Insbesondere weist der Adapter zumindest einen sich vom Druckeinlass in Richtung der Manometer-Schnittstelle erstreckenden Druckkanal und einen sich von der Manometer-Schnittstelle zur Umgebung erstreckenden Entlüftungskanal auf, wobei das Manometerteil dazu eingerichtet ist, zwischen einer ersten, den Druckkanal freigebenden Drehstellung und einer zweiten, den Entlüftungskanal freigebenden Drehstellung hin- und herbewegt zu werden, wobei das Manometerteil eine den Druckkanal verschließende Verschlussfläche aufweist, welche in der Bewegungsstellung in einer durch den Druckkanal am Anschlussteil definierten Anströmrichtung angeströmt wird, und wobei das Manometerteil entgegen der Anströmrichtung am Anschlussteil abgestützt und in einer Ebene in einem Winkel größer als 70° geneigt, vorzugsweise senkrecht, zur Anströmrichtung bewegbar am Anschlussteil aufgenommen ist.

Das gemäß der Erfindung am Anschlussteil in einer Ebene in einem Winkel geneigt, insbesondere senkrecht, zur Anströmrichtung bewegbar aufgenommene Manometerteil setzt eine konstruktive Lösung um, mittels derer die Funktionsprüfung eines am Schnellentlüftungs-Adapter aufnehmbaren Manometers auf vereinfachte und trotz allem zuverlässige Weise vorgenommen werden kann. Mit der erfindungsgemäß bewegbaren Ausgestaltung des Manometerteils zum Anschlussteil ist mittels der im Winkel geneigt zur Anströmrichtung verwirklichten Bewegung des Manometerteils eine verbesserte Kraftentkopplung von einem innerhalb eines Systems wirkenden Druckes erreicht, was das Bewegen des Manometerteils relativ zum Anschlussteil insgesamt mit einem geringeren Kraftaufwand ermöglicht. Zudem wird mit dem Bewegen des Manometerteils aus seiner ersten Bewegungsstellung, vorliegend in einer Ebene in einem Winkel größer als 70° geneigt, vorzugsweise quer, zu der auf die Verschlussfläche am Manometerteil wirkenden Anströmrichtung, bereits nach einer geringen Wegstrecke die direkte fluidleitende Verbindung des Manometers am Schnellentlüftungs-Adapter zum Druckkanal getrennt. Dadurch ist die Menge des Druckmediums, das beim Bewegen des Manometerteils in der zweiten, den Entlüftungskanal freigebenden Drehstellung über den Entlüftungskanal austritt, wegen des innerhalb des Schnellentlüftungs-Adapters vorhandenen, minimierten Druckraumes, deutlich verringert. Vorzugsweise wird das Manometerteil am Anschlussteil senkrecht zur Anströmrichtung, die in etwa der Erstreckungsrichtung des Druckkanals am Anschlussteil entspricht, bewegt.

Gemäß einer bevorzugten Weiterbildung des Schnellentlüftungs-Adapters ist vorgesehen, dass die erste Bewegungsstellung eine Druckübertragungsstellung definiert, und die zweite Bewegungsstellung eine Entlüftungsstellung definiert, wobei das Manometerteil dazu eingerichtet ist, in der Druckübertragungsstellung ausschließlich den Druckkanal freizugeben, und in der Entlüftungsstellung ausschließlich den Entlüftungskanal freizugegeben. Mit der erfindungsgemäßen Ausgestaltung am Schnellentlüftungs-Adapter ist zu keinem Zeitpunkt der Bewegung des Manometerteils zwischen der ersten und der zweiten Bewegungsstellung eine direkte fluidleitende Verbindung zwischen dem Druckeinlass am Anschlussteil und dem Entlüftungskanal am Adapter zugelassen. Somit ist bevorzugt einem unkontrollierten Austreten des Druckmediums aus dem Adapter entgegengewirkt. Vorzugsweise wird das Manometerteil, um von der ersten Drehstellung in die zweite Drehstellung bewegt zu werden, um einen Drehwinkel α von etwa 90° verdreht. Allein durch den zurückgelegten Drehwinkel ist eine konstruktive Trennung zwischen dem am Anschlussteil ausgebildeten Druckkanal und dem Entlüftungskanal erzeugt.

Gemäß einer bevorzugten Ausgestaltung des Schnellentlüftungs-Adapters weist das Manometerteil zwischen der ersten und zweiten Bewegungsstellung einen Zwischenstellungsbereich auf, in welchem sowohl der Druckkanal als auch der Entlüftungskanal gesperrt sind. Insbesondere durch den am Schnellentlüftungs-Adapters einstellbaren Zwischenstellungsbereich ist gewährleistet, dass das weiterhin im Druckkanal anstehenden unter Druck stehenden Druckmedium nicht in Richtung des Entlüftungskanals übertreten kann. Bevorzugt wirkt in dem Zwischenstellungsbereich mit dem drehbar am Anschlussteil aufgenommenen Manometerteil ein Dichtelement derart zusammen, dass der Druckkanal gegenüber dem Entlüftungskanal dauerhaft abgedichtet ist. Der Zwischenstellungsbereich ist vorzugsweise ausgehend von der ersten Bewegungsstellung in einem Winkelbereich von etwa 35° bis 40°, insbesondere bei etwa 37,6° definiert, in dem der Entlüftungskanal vollständig gesperrt ist. Der Zwischenstellungsbereich ist vorzugsweise ausgehend von der zweiten Bewegungsstellung in einem Winkelbereich von etwa 50° bis 55°, insbesondere bei etwa 52,4° definiert, in dem der Druckkanal vollständig gesperrt ist.

In einer bevorzugten Ausgestaltung ist das Manometerteil dreh- oder schiebbar am Anschlussteil aufgenommen. Mit der dreh- oder schiebbaren Aufnahme des Manometerteils am Anschlussteil ist eine jeweils einfache Möglichkeit zur Umsetzung einer Verstellbewegung des Manometerteils in einer Ebene in einem Winkel größer als 70° geneigt zu der auf die Verschlussfläche am Manometerteil gerichteten Anströmrichtung am Anschlussteil geschaffen. In einer bevorzugten Ausgestaltung ist das Manometerteil in einer Ebene im angegebenen Winkel zur Anströmrichtung und insbesondere zum dem die Anströmrichtung definierenden Druckkanal drehbar am Anschlussteil gelagert. Eine alternative Ausgestaltung sieht vor, dass das Manometerteil in einer Ebene geneigt, vorzugsweise senkrecht zur Anströmrichtung und insbesondere zum dem die Anströmrichtung definierenden Drucckanal relativ zum Anschlussteil verschiebbar ausgebildet ist.

Eine Weiterbildung des Schnellentlüftungs-Adapters sieht vor, dass das Anschlussteil an einem zum Anschlussstutzen entgegengesetzten Ende eine Aufnahme für das Manometerteil aufweist, welche vorzugsweise als zylindrische oder ovale Ausnehmung ausgebildet ist. Mittels der Aufnahme am Anschlussteil ist das Manometerteil bevorzugt spaltfrei aufgenommen, wobei das Manometerteil in einer zylindrischen Ausnehmung vorzugsweise vollumfänglich mit seinen innerhalb der Aufnahme am Anschlussteil eingesetzten Flächenbereichen in Anlage steht. Dadurch ist eine verkantfreie Führung zwischen den miteinander in Anlage stehenden Flächenbereichen von Anschlussteil und Manometerteil erzielt. Vorzugsweise ist in einer Ausgestaltung der Erfindung die Aufnahme für das Manometerteil als zylindrische Ausnehmung ausgebildet, wodurch das Bewegen, insbesondere Verdrehen des Manometerteils in der Aufnahme ohne hohen Kraftaufwand vorgenommen werden kann. Eine alternative Ausführung sieht vor, dass die Aufnahme für das Manometerteil als ovale Ausnehmung, ähnlich einer nutartigen Vertiefung, ausgebildet ist, innerhalb der das Manometerteil verschiebbar gelagert ist.

Gemäß einer bevorzugten Ausgestaltung weist das Manometerteil einen zylindrischen oder ovalen Grundkörper mit einem am Anschlussteil dreh- oder schiebbar aufgenommenen Einsteckende auf, wobei die Manometer-Schnittstelle an einem zum Einsteckende entgegengesetzt angeordneten Ende ausgebildet ist. Der zylindrische oder ovale Grundkörper des Manometerteils ist bevorzugt nahezu vollständig innerhalb der Aufnahme am Anschlussteil aufgenommen, wodurch das Manometerteil am Anschlussteil des Adapters nur wenig zusätzlich an Höhe aufbaut. Damit weist der erfindungsgemäße Schnellentlüftungs-Adapter insgesamt eine geringe Bauhöhe auf, wodurch dieser platzsparend als Verbindungsteil zwischen einem unter Druck stehenden Bauteil, wie beispielsweise einer Armatur, und einem daran aufgenommenen Manometer verwendet werden kann. Das Einsteckende des Manometerteils ist insbesondere korrespondierend zur zylindrischen bzw. ovalen Ausnehmung an der Aufnahme des Anschlussteils ausgebildet. Bei der ovalen Ausgestaltung von Manometerteil und Ausnehmung, weist die Ausnehmung in ihrer Längsrichtung, in Richtung der das Manometerteil zum Anschlussteil zum Verstellen bewegt wird, ein entsprechendes Übermaß zum darin aufgenommenen Einsteckende des Manometerteils auf. Die Manometer-Schnittstelle ist vorliegend an dem zum Einsteckende entgegengesetzt angeordneten Ende ausgebildet, was die Anbindung des Manometers an das Manometerteil und damit an den Schnellentlüftungs-Adapter vereinfacht. Anschlussstutzen und Manometer sind auf voneinander abgewandten Seiten des Adapters angeordnet.

Gemäß einer Weiterbildung der Erfindung weist das Manometerteil einen sich vom Einsteckende zur Manometer-Schnittstelle erstreckenden Durchbruch auf, der in Abhängigkeit von der jeweiligen Bewegungsstellung des Manometerteils entweder mit dem Druckkanal oder mit dem Entlüftungskanal fluidleitend verbunden ist. Mit dem Vorsehen nur eines Durchbruchs am Manometerteil ist das fluidleitende Trennen des Druckkanals und des Entlüftungskanals voneinander weiter vereinfacht. Durch das Verdrehen des Manometerteils um einen vorbestimmten Winkel, von vorzugsweise etwa 90°, oder dem Verschieben des Manometerteils entlang einer Wegstrecke, von etwa 1 cm, ist innerhalb der Aufnahme am Anschlussteil ein ausreichend großer Abstand zwischen dem, insbesondere in der ersten Bewegungsstellung mit dem Durchbruch fluchtenden Druckkanal und dem in der zweiten Bewegungsstellung mit dem Durchbruch fluchtenden Entlüftungskanal ausgebildet. Zusammen mit dem dreh- oder verschiebbar in der Aufnahme am Anschlussteil aufgenommenen Einsteckende des Manometerteils ist eine ausreichend wirksame Abdichtung erzielt. Vorliegend definiert der Durchbruch am Manometerteil in Abhängigkeit von der Dreh- oder Schiebestellung des Manometerteils einen Abschnitt des Druckkanals oder des Entlüftungskanals.

In einer Weiterbildung der Erfindung erstrecken sich der Druckkanal, vorzugsweise der Durchbruch am Manometerteil, parallel zur Längsachse von Anschlussteil und Manometerteil. Mit der parallelen Ausrichtung des Druckkanals am Anschlussteil und insbesondere dem Durchbruch im Manometerteil zur Adapter-Längsachse ist eine konstruktiv einfache Druckübertragung vom Anschlussstutzen, der in einer bevorzugten Ausgestaltung einen Gewindeabschnitt mit einem Außengewinde aufweist und an einem Druckanschluss mit einem komplementär ausgebildeten Gewindeabschnitt einer Armatur aufgenommen ist, in Richtung der Manometer-Schnittstelle bzw. eines Manometers am Manometerteil bewirkt. Bevorzugt weist der Druckkanal vom Anschlussstutzen bis zur Manometer-Schnittstelle eine vollständig geradlinige Ausrichtung ohne etwaige den Druck mindernden Umlenkungen am Adapter auf. In einer bevorzugten Ausgestaltung weist die Manometer-Schnittstelle einen Gewindeabschnitt mit einem Innengewinde zur Aufnahme des daran zu montierenden Manometers auf.

Gemäß einer bevorzugten Weiterbildung weist die Aufnahme am Anschlussteil einen ebenen Grund auf, wobei der Druckkanal am Anschlussteil am Grund der Aufnahme mündet, und wobei die Mündung des Druckkanals von einem mit dem Einsteckende des Manometerteils zusammenwirkenden Dichtelement umgeben ist. Mit Vorsehen eines Dichtelements, welches bevorzugt ringförmig ausgeführt ist und die Mündung des Druckkanals in der Aufnahme vollständig umgibt, ist das fluiddichte Abdichten zwischen der Aufnahme und dem in der Aufnahme drehbar aufgenommenen Einsteckende des Manometerteils weiter verbessert. Mit dem Dichtelement ist einem Druckübertritt vom Druckkanal in Richtung des Entlüftungskanals oder dem Austreten des Drucks zwischen den miteinander in Anlage stehenden Flächenbereichen von Aufnahme und Einsteckendes in die Umgebung entgegengewirkt. In einer Ausführung weist das Dichtelement eine Breite auf, welche im Zwischenstellungsbereich des Manometerteils bewirkt, dass der Durchbruch im Manometerteil vollständig abgedeckt ist und somit weder zum Druckkanal noch zum Entlüftungskanal fluidleitenden Kontakt hat.

Gemäß einer bevorzugten Ausgestaltung des Schnellentlüftungs-Adapters sind der Drucckanal, vorzugsweise der Durchbruch, radial versetzt zur Längsachse von Anschlussteil bzw. Manometerteil angeordnet. Mit Ausbilden des Druckkanals und des Durchbruchs mit einem Abstand von etwa 0,5 bis 2 cm zur Längsachse des Anschlussteils und Manometerteils ist eine ausreichend große Distanz zwischen den bevorzugt jeweils eine Endlagenstellung definierenden, ersten und zweiten Bewegungsstellungen, vorzugsweise von Drehstellungen, am Adapter geschaffen. Insbesondere ein ungewolltes Übertreten des dauerhaft am Druckkanal anliegenden Drucks in Richtung des Entlüftungskanals ist damit weiter erschwert. Vorzugsweise definiert bzw. bildet der Durchbruch am Manometerteil in der ersten Drehstellung einen Abschnitt des Druckkanals und in der zweiten Drehstellung einen Abschnitt des Entlüftungskanals aus.

Vorzugsweise erstreckt sich der Entlüftungskanal am Anschlussteil in radialer Richtung zur Längsachse. Mittels des Entlüftungskanals ist in der zweiten Bewegungsstellung eine fluidleitende Verbindung zwischen der Manometer-Schnittstelle und der Umgebung um den Schnellentlüftung-Adapter herum ausgebildet. Mit dem radialen Herausleiten des Druckmediums aus dem Adapter in der Entlüftungsstellung ist ein gezieltes kontrolliertes Entlüften des Druckmediums in einer vorgegebenen Richtung am Adapter erzielt. Ferner strömt wegen der zuverlässigen und vor allem dauerhaften fluidleitenden Trennung zwischen dem Druckkanal und dem Entlüftungskanal in Verbindung mit dem am Adapter vergleichsweise vorhandenen, kleinen Druckraum, im Vergleich zu den bekannten Testarmaturen während des Entlüftungsvorgangs, eine deutlich verringerte Menge des Druckmediums aus dem Auslass am Entlüftungskanal in die Umgebung. Eine mögliche Gefährdung eines Anwenders durch das austretende Druckmedium ist damit vernachlässigbar gering.

Eine Weiterbildung des Schnellentlüftungs-Adapters sieht vor, dass am Einsteckende ein Verrastelement angeordnet ist, wobei die Aufnahme eine radiale Hinterschneidung aufweist, die mit dem Verrastelement zusammenwirkt, welches dazu eingerichtet ist, das Manometerteil innerhalb der Aufnahme am Anschlussteil in axialer Richtung zu arretieren. Mithilfe des Verrastelements, das in einer bevorzugten Ausgestaltung als ein elastisch verformbarer Sicherungsring ausgebildet ist, lässt sich das dreh- oder schiebbar in der Aufnahme gehaltene Manometerteil auf einfache Weise innerhalb der Aufnahme am Anschlussteil fixieren, ohne jedoch das Bewegen, insbesondere Verdrehen oder Verschieben des Manometerteils in der Aufnahme am Anschlussteil zu beeinträchtigen. Das Verrastelement wirkt mit einer an der Umfangsfläche des Einsteckendes bevorzugt als Ringnut ausgebildeten Hinterschneidung zusammen, wobei die Nut am Manometerteil eine Tiefe aufweist, die zumindest der Breite des Sicherungsrings in radialer Richtung entspricht. Die Hinterschneidung in der Aufnahme ist vorzugsweise als Umfangsnut und in etwa auf gleicher Höhe wie die Ringnut am Einsteckende ausgebildet. Vorzugsweise wird mittels des Verrastelements in der Arretierstellung des Manometerteils in der Aufnahme eine Anpresskraft zwischen einer ebenfalls eben ausgebildeten Stirnfläche am Einsteckende des Manometerteils und dem am Grund der Aufnahme angeordneten und sich um die Druckkanal-Mündung erstreckenden Dichtelement, welches um ein vorbestimmtes Mindestmaß über den Grund der Aufnahme vorsteht, ausgeübt. Damit wird die Abdichtwirkung des Manometerteils gegenüber der Aufnahme am Anschlussteil weiter erhöht.

Gemäß einer bevorzugten Weiterbildung am Schnellentlüftungs-Adapter sind am Anschlussteil und am Manometerteil einander gegenseitig in den Verstellweg des Manometerteils vorstehende Anschläge zur Definition der ersten und zweiten Bewegungsstellung, vorzugsweise Drehstellung, des Manometerteils ausgebildet. Damit werden in der ersten und zweiten Bewegungsstellung jeweils feste Endlagen für das Manometerteil und ein positionsgenaues Ausrichten des Durchbruchs am Manometerteil zum Druckkanal bzw. Entlüftungskanal am Anschlussteil zum Umsetzen der Druckübertragungs- oder Entlüftungsfunktion definiert. Vorzugsweise weist das Manometerteil entlang eines Bereichs seines äußeren Umfangs eine radial nach außen vorstehende Auskragung aus, welche in zumindest eine bereichsweise ausgebildete Ausnehmung am Anschlussteil eingreift. Mithilfe der am Manometerteil und am Anschlussteil miteinander in Anlage bringbaren Bauteilbereiche ist die Anschlagfunktion auf konstruktiv einfache Weise in beiden Bewegungsstellungen, bevorzugt der ersten und zweiten Drehstellung des Manometerteils zum Anschlussteil umgesetzt, in denen der Durchbruch am Manometerteil in der jeweiligen Drehstellung dann bevorzugt fluchtend zum Druckkanal oder Entlüftungskanal verläuft.

In einer Weiterbildung des Schnellentlüftungs-Adapters weist das Manometerteil eine Handhabe zum Bewegen des Manometerteils zwischen der ersten und zweiten Bewegungsstellung auf. Mithilfe der unmittelbar am Manometerteil angeordneten Handhabe ist das Hin- und Herbewegen des Manometerteils zwischen der ersten und zweiten Dreh- oder Schiebestellung am Anschlussteil auf einfache Weise möglich. Die Handhabe kann beispielsweise als ein an der radial nach außen vorstehenden Auskragung des Manometerteils angeordneter Betätigungshebel ausgebildet sein. In einer alternativen Ausführungsform ist der Schnellentlüftungs-Adapter dazu eingerichtet, durch Ausüben einer Verstellkraft auf das am Manometerteil aufgenommene Manometer zwischen der ersten und der zweiten Bewegungsstellung hin- und herbewegt zu werden. Mit dem Verstellen des Schnellentlüftungs-Adapters zwischen der ersten und zweiten Bewegungsstellung über das daran angeordnete Manometer ist die Betätigung weiter vereinfacht. Jedoch ist sicherzustellen, dass einem unbeabsichtigten Lösen eines an der Manometer-Schnittstelle aufgenommenen Manometers entgegengewirkt ist.

Gemäß einem zweiten Aspekt betrifft die Erfindung einen Schnellentlüftungs-Adapter zum Testen der Funktionsfähigkeit eines Manometers, aufweisend ein Anschlussteil mit einem Anschlussstutzen zum fluidleitenden Verbinden mit einem unter Druck stehenden Bauteil, wobei der Anschlussstutzen einen Druckeinlass und ein am Anschlussteil angeordnetes und relativ zum Anschlussteil bewegbares Manometerteil mit einem Manometer aufweist. Die Erfindung löst auch die diesem Schnellentlüftungs-Adapter zugrunde gelegte Aufgabe mit den Merkmalen nach Anspruch 14. Auch an dem Schnellentlüftungsadapter mit einem direkt an seinem Manometerteil angeordneten Manometer ist mittels des in einer Ebene in einem Winkel von größer als 70° geneigt, insbesondere senkrecht zur Anströmrichtung bewegbar aufgenommenen Manometerteils eine einfach umsetzbare Verstellbewegung des Manometerteils am Anschlussteil verwirklicht, mittels derer die Funktionsprüfung des am Schnellentlüftungsadapter montierten Manometers auf einfache und zuverlässige Weise möglich ist.

Gemäß einer bevorzugten Ausgestaltung des Schnellentlüftungs-Adapters gemäß dem zweiten Aspekt ist das Manometer integral mit dem Manometerteil ausgebildet bzw. bildet das Manometer oder das Manometerteil einen Teil des jeweils anderen und/oder ist der Adapter gemäß mindestens einem Merkmal der vorstehend beschriebenen bevorzugten Ausgestaltungen gemäß dem ersten Aspekt ausgebildet. Mit der integralen Ausgestaltung bzw. der Einteiligkeit zwischen dem Manometerteil und dem Manometer ist eine konstruktiv einfache Ausgestaltung ohne Zwischenschaltung einer weiteren Schnittstelle zwischen Manometerteil und Manometer erreicht. Damit ist im Betrieb des Adapters ein ungewolltes Lösen des Manometers am Manometerteil insbesondere bei einer auf das Manometer einwirkenden Verstellkraft vermieden.

Vorzugsweise ist der Schnellentlüftungs-Adapter gemäß dem zweiten Aspekt nach einer der vorstehend beschriebenen, bevorzugten Ausführungsformen des Schnellentlüftungs-Adapters gemäß dem ersten Aspekt ausgebildet, sofern sich diese nicht widersprechen, wie beispielsweise hinsichtlich der am Schnellentlüftungs-Adapter nach dem ersten Aspekt vorgesehenen Manometer-Schnittstelle. Vorzugsweise ist vorgesehen, dass das Manometerteil einen zylindrischen oder ovalen Grundkörper mit einem am Anschlussteil dreh- oder schiebbar aufgenommenen Einsteckende aufweist, wobei das Manometer an einem zum Einsteckende entgegengesetzt angeordneten Ende angeordnet ist. Ferner ist vorgesehen, dass das Manometerteil einen sich vom Einsteckende zum Manometer erstreckenden Durchbruch aufweist, der in Abhängigkeit von der jeweiligen Bewegungsstellung des Manometerteils mit dem Druckkanal oder mit dem Entlüftungskanal fluidleitend verbunden ist. Vorliegend definiert der sich vom Einsteckende am Manometerteil zum Manometer erstreckende Durchbruch in Abhängigkeit von der Bewegungsstellung des Manometerteils relativ zum Anschlussteil einen Abschnitt des Druckkanals oder des Entlüftungskanals.

Die Erfindung betrifft in einem weiteren Aspekt eine Armatur, insbesondere ein Feuerlöschanlagenventil mit einem Gehäuse und wenigstens einem Druckraum innerhalb des Gehäuses, wobei das Gehäuse wenigstens einen mit dem Druckraum fluidleitend verbundenen Druckanschluss für ein Manometer aufweist, und einem mit dem Gehäuse über dessen Druckanschluss fluidleitend verbundenen Manometer.

Die Erfindung löst auch die dem Schnellentlüftungs-Adapter zugrunde gelegte Aufgabe, indem in einem Verbindungsbereich zwischen dem Druckanschluss und dem Manometer ein Schnellentlüftungs-Adapter gemäß einer der vorstehend beschriebenen bevorzugten Ausführungsformen angeordnet ist. Ein solch erfindungsgemäßer Schnellentlüftungs-Adapter wird als eine Art Zwischenbauteil zwischen dem Druckanschluss an der Armatur und dem an der Armatur zu montierenden Manometer verwendet. Mit der erfindungsgemäßen Ausgestaltung des Schnellentlüftungs-Adapters baut dieser als Zwischenbauteil nur geringfügig am Druckanschluss der Armatur auf, wodurch für das Unterbringen eines erfindungsgemäßen Schnellentlüftungs-Adapters ein deutlich verringerter Bauraum benötigt wird. Zudem ist mittels des am Schnellentlüftungs-Adapter erfindungsgemäß drehbar am Anschlussteil aufgenommenen Manometerteils eine Entlüftungsfunktion umsetzbar, bei der zum einen eine vergleichsweise geringe Menge des im Schnellentlüftungs-Adapter enthaltenen Druckmediums während des Entlüftens austritt, sodass keine Gefährdung eines den Schnellentlüftungs-Adapter betätigenden Anwenders gegeben ist. In einer Ausführung ist das Manometer mittels einer Manometer-Schnittstelle am Manometerteil befestigt. In einer alternativen Ausgestaltung sind das Manometer und das Manometerteil am Schnellentlüftungs-Adapter einteilig bzw. als ein Bauteil ausgebildet.

Die Erfindung betrifft gemäß einem weiteren Aspekt ein Verfahren zum Entlüften eines an einer Armatur angeordneten Manometers unter Verwendung eines Schnellentlüftungs-Adapters, insbesondere eines Schnellentlüftungs-Adapters nach einer der vorstehend beschriebenen bevorzugten Ausführungsformen.

Das erfindungsgemäße Verfahren löst ebenfalls die eingangs beschriebene Aufgabe mit den Schritten: Bereitstellen bzw. Montieren eines Manometers an einer unter Druck stehenden Armatur unter Verwendung eines Schnellentlüftungs-Adapters als Zwischenbauteil zwischen der Armatur und dem Manometer und Herstellen einer fluidleitenden Verbindung zwischen der Armatur und dem Manometer in einer ersten Bewegungsstellung des Manometers relativ zur Armatur, und Bewegen des Manometers, insbesondere Verdrehen oder Verschieben des Manometers (106), in einer Ebene in einem Winkel größer als 70° geneigt, vorzugsweise senkrecht, zu einer durch einen Druckkanal am Schnellentlüftungs-Adapters (10) definierten Anströmrichtung von der ersten eine Druckübertragungsstellung definieren Bewegungsstellung in eine zweite eine Entlüftungsstellung definierenden Bewegungsstellung, in der die Druckübertragung, insbesondere in einem am Adapter ausgebildeten Druckkanal, in Richtung des Manometers unterbrochen und die Entlüftung, insbesondere mittels eines am Adapter ausgebildeten Entlüftungskanals, in die Umgebung freigegeben wird.

Der Erfindung liegt die Erkenntnis zugrunde, dass mithilfe der erfindungsgemäßen Verfahrensschritte im Vergleich zum Stand der Technik das Entlüften eines an einer Armatur montierten Manometers und insbesondere das Testen der Funktionsfähigkeit des Manometers im entlüfteten Zustand vereinfacht ist. Statt an den bekannten Entlüftungsadaptern beim Entlüften versehentlich mit dem aus dem Entlüftungskanal austretenden Druckmedium in Kontakt zu gelangen bzw. dass beim Herstellen einer druckübertragenden Verbindung zwischen dem Manometerteil und dem Druckanschluss am Anschlussteil das Druckmedium unkontrolliert austritt, wird mittels der erfindungsgemäßen Verfahrensschritte eine gezielte und kontrollierte Entlüftung umgesetzt. Insbesondere erfolgt beim Bewegen des Manometerteils in einer Ebene in einem Winkel größer als 70° geneigt, vorzugsweise senkrecht, zu einer durch einen Druckkanal am Schnellentlüftungs-Adapters definierten Anströmrichtung von der ersten Dreh- oder Schiebestellung in die zweite Dreh- oder Schiebestellung ein unmittelbares Trennen der Fluidverbindung vom Druckanal zum Manometer und, insbesondere erst nach dem Trennen der Fluidverbindung zwischen Druckanal und Manometer, das Freigeben des Entlüftungskanals und damit das Herstellen der Fluidverbindung vom Manometer zur Umgebung. Dadurch wird beim Entlüften eine vergleichsweise geringe Menge des Druckmediums derart kontrolliert am erfindungsgemäßen Schnellentlüftungs-Adapter ausgegeben, dass eine etwaige Gefährdung eines das Verfahren umsetzenden Anwenders vermieden ist. In einer bevorzugten Weiterbildung wird, um die erneute Druckmessung mittels des Manometers zu ermöglichen, das Manometer, insbesondere ein das Manometer aufnehmendes Manometerteil, von der zweiten Bewegungsstellung zurück in die erste Bewegungsstellung bewegt.

Die zum erfindungsgemäßen Schnellentlüftungs-Adapter beschriebenen, bevorzugten Ausführungsformen bzw. Weiterbildungen sind zugleich auch bevorzugte Ausführungsformen der erfindungsgemäßen Armatur sowie des erfindungsgemäßen Verfahrens zum Entlüften eines an einer Armatur angeordneten Manometers. Zur Armatur bzw. zum Verfahren beschriebene, bevorzugte Ausführungsformen bzw. Weiterbildungen, welche sich auf den Schnellentlüftungs-Adapter beziehen, sind zugleich auch bevorzugte Ausführungsformen des vorliegenden Schnellentlüftungs-Adapters.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine perspektivische Ansicht einer ersten Ausführung eines erfindungsgemäßen Schnellentlüftungs-Adapters;
- Fig. 2 bis 4:: Draufsichten des erfindungsgemäßen Schnellentlüftungs-Adapters nach Fig. 1 in verschiedenen Drehstellungen;
- Fig. 5a,b:: Schnittdarstellungen des erfindungsgemäßen Schnellentlüftungs-Adapters nach Fig. 1 in der ersten Drehstellung;
- Fig. 6a,b:: Schnittdarstellungen des erfindungsgemäßen Schnellentlüftungs-Adapters nach Fig. 1 in der zweiten Drehstellung;
- Fig. 7a,b:: eine Ansicht einer Armatur und eines mittels des erfindungsgemäßen Schnellentlüftungs-Adapters an der Armatur montierten Manometers, und
- Fig. 8:: eine Schnittansicht einer zweiten Ausführung eines erfindungsgemäßen Schnellentlüftungs-Adapters, und
- Fig. 9:: eine schematische Ansicht eines erfindungsgemäßen Verfahrens zum Entlüften eines an einer Armatur angeordneten Manometers.

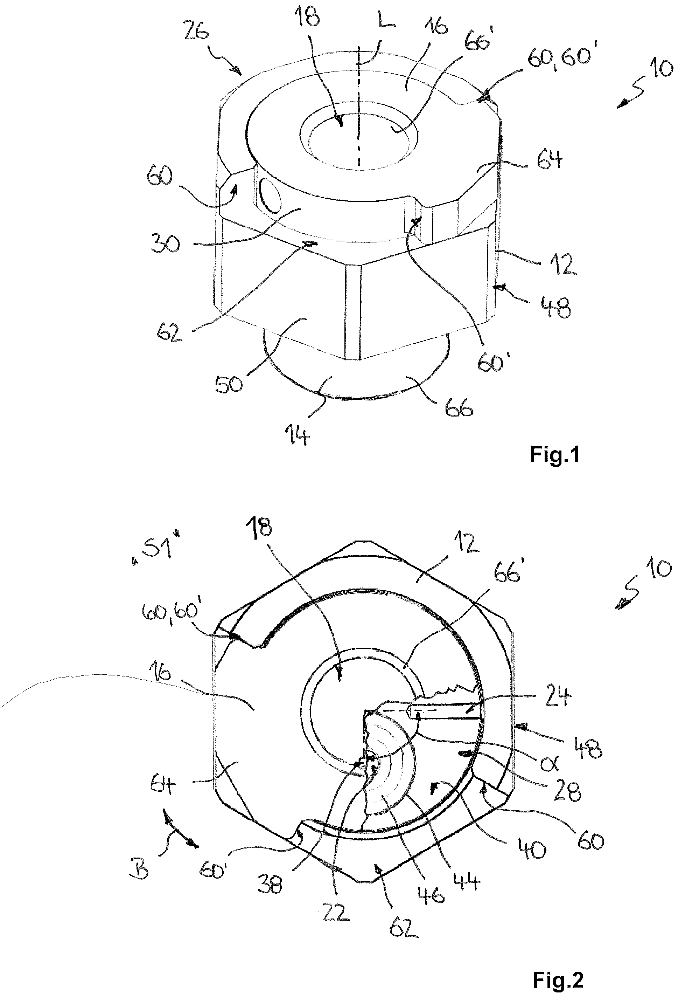

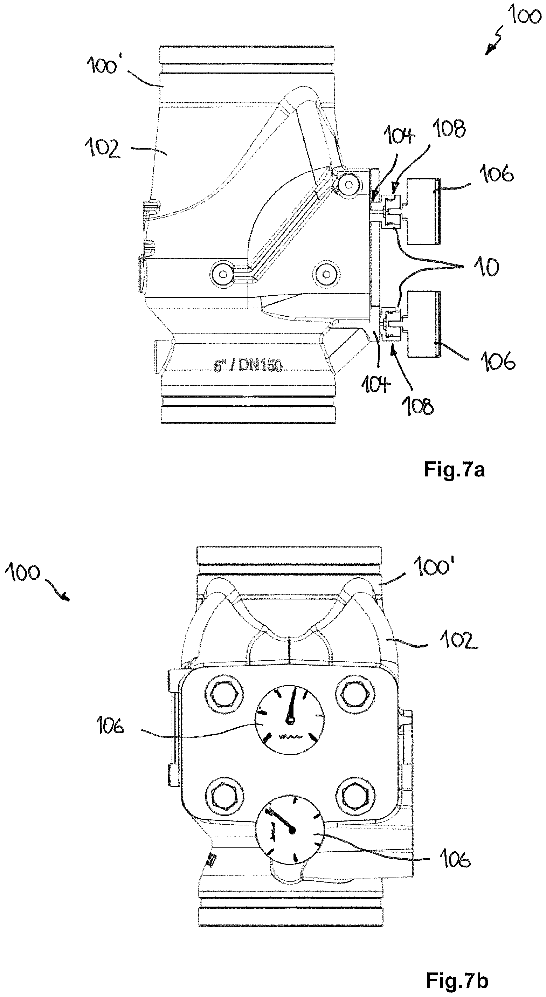

Fig. 1 zeigt einen Schnellentlüftungs-Adapter 10, mittels dessen die Funktionsfähigkeit eines an einer Armatur 100 angeordneten Manometers 106 (Fig. 7) getestet werden kann. Der Schnellentlüftungs-Adapter 10 umfasst ein Anschlussteil 12, das einen Anschlussstutzen 14 zum fluidleitenden Verbinden mit einem Druckanschluss 104, 104' des unter Druck stehenden Bauteils, insbesondere der Armatur 100, aufweist. Der Schnellentlüftungs-Adapter 10 umfasst ferner ein am Anschlussteil 12 angeordnetes und relativ dazu bewegbares Manometerteil 16, das eine Manometer-Schnittstelle 18 zum fluidleitenden Koppeln mit dem Manometer 106 aufweist.

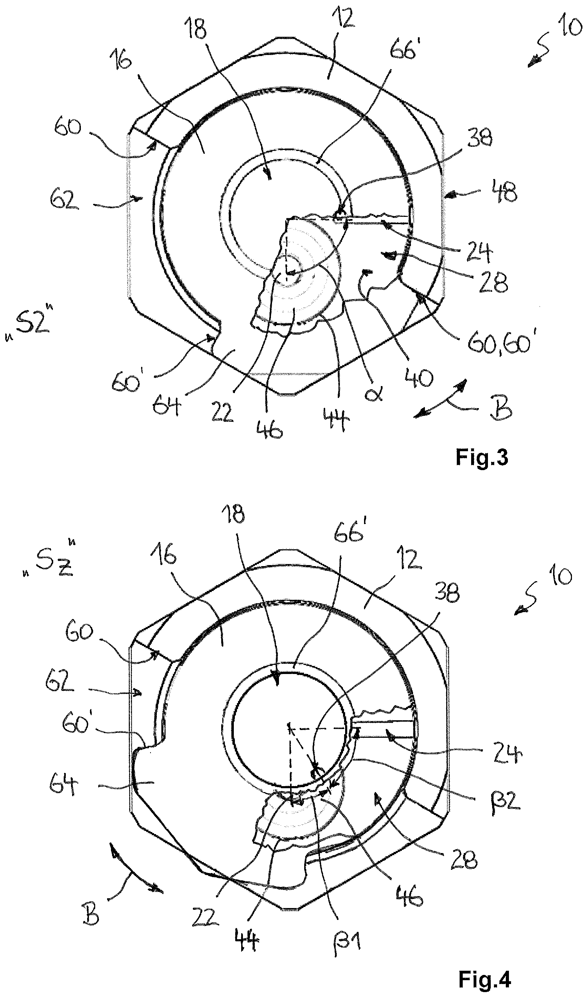

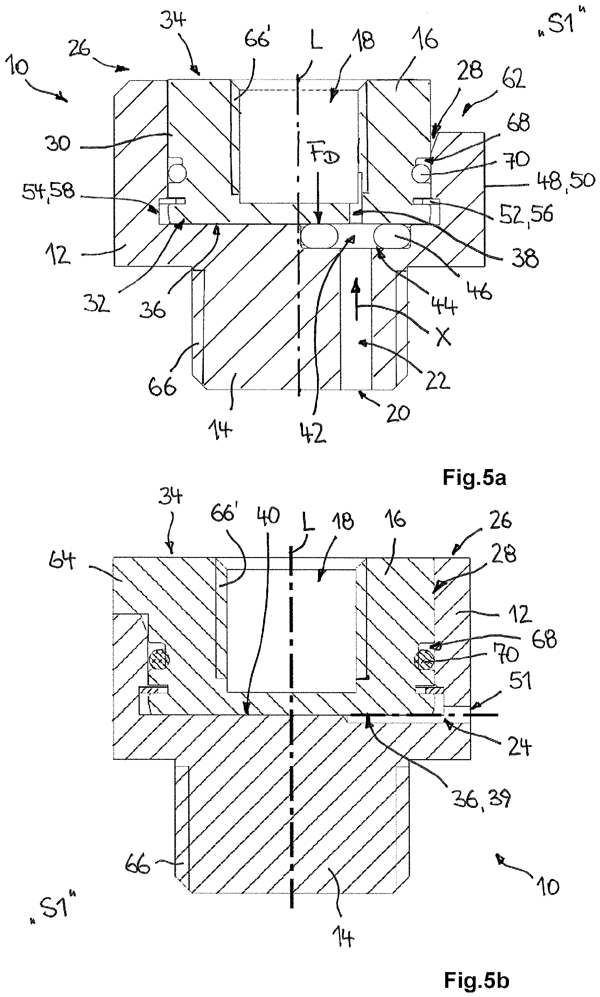

Der Schnellentlüftungs-Adapter 10, siehe Fig. 5, weist am Anschlussstutzen 14 einen Druckeinlass 20 und einen vom Druckeinlass 20 in Richtung der Manometer-Schnittstelle 18 verlaufenden Druckkanal 22 auf. Über den Druckkanal 22 erfolgt im Normalbetrieb die Druckübertragung zu dem an der Manometer-Schnittstelle 18 angeordneten Manometer 106. Der Schnellentlüftungs-Adapter 10, siehe Fig. 3, umfasst ferner einen sich von der Manometer-Schnittstelle 18 zur Umgebung erstreckenden Entlüftungskanal 24, mittels dessen das Manometer 106 in vorgegebenen Zeitabständen entlüftet und auf seine Funktionsfähigkeit hin überprüft werden kann.

Gemäß der vorliegenden Ausführung ist das Manometerteil 16 drehbar am Anschlussteil 12 aufgenommen. Das Manometerteil 16 ist insbesondere dazu eingerichtet, zwischen einer in Fig. 2 gezeigten, ersten, den Druckkanal 22 freigebenden Drehstellung S1 und einer in Fig. 3 gezeigten, zweiten, den Entlüftungskanal 24 freigebenden Drehstellung S2 hin- und herbewegt zu werden. In einer bevorzugten Ausführung ist das Manometerteil 16 während des Bewegens zwischen der ersten Drehstellung S1, welche eine Druckübertragungsstellung definiert, und der zweiten Drehstellung S2, welche eine Entlüftungsstellung definiert, dazu eingerichtet, entweder ausschließlich den Druckkanal 22 oder ausschließlich den Entlüftungskanal 24 freizugeben.

Wie aus Fig. 4 zu entnehmen, ist das Manometerteil während des Bewegens zwischen der ersten und zweiten Drehstellung S1, S2 ferner dazu eingerichtet, einen Zwischenstellungsbereich S_{Z} einzunehmen, in der der Druckkanal 22 und der Entlüftungskanal 24 jeweils gesperrt sind. Der Zwischenstellungsbereich S_{Z} ist vorzugsweise ausgehend von der ersten Drehstellung S1 in einem Winkelbereich β1 von etwa 35° bis 40°, insbesondere bei etwa 37,6° definiert, in dem der Entlüftungskanal 24 vollständig gesperrt ist. Der Drehzwischenstellungsbereich S_{Z} ist vorzugsweise ausgehend von der zweiten Drehstellung S2 in einem Winkelbereich β2 von etwa 50° bis 55°, insbesondere bei etwa 52,4° definiert, in dem der Druckkanal 22 vollständig gesperrt ist.

Die Schnittdarstellungen in Fig. 5a und 5b zeigen den Schnellentlüftungs-Adapter 10 in seiner ersten Bewegungsstellung, insbesondere Drehstellung, S1. Wie den Figuren zu entnehmen ist, weist das Anschlussteil 12 an einem zum Anschlussstutzen 14 entgegengesetzten Ende 26 eine Aufnahme 28 für das Manometerteil 16 auf, in der das Manometerteil 16 drehbar ist. Die Aufnahme 28 ist als zylindrische Ausnehmung ausgebildet und das Manometerteil 16 weist einen zylindrischen Grundkörper 30 auf. Die Aufnahme 28 und der Grundkörper 30 weisen komplementär ausgebildete Innen- bzw. Außenkonturen auf, wodurch die Drehbarkeit des Manometerteils 16 in der Aufnahme 28 gewährleistet ist. Am Manometerteil 16, insbesondere dem Grundkörper 30, ist ein Einsteckende 32 vorgesehen, mittels dessen das Manometerteil 16 nahezu vollständig in der Aufnahme 28 aufgenommen ist. Die Manometer-Schnittstelle 18 ist an dem zum Einsteckende 32 entgegengesetzten Ende 34 ausgebildet. In einer nicht näher gezeigten Ausführung sind das Manometerteil 16 und das daran angeordnete Manometer 106 (Fig. 7) einteilig ausgebildet, insbesondere ohne Zwischenschaltung einer Manometer-Schnittstelle.

Wie ferner aus Fig. 5a ersichtlich ist, weist das Manometerteil 16 an seinem Einsteckende 32 einen sich insbesondere von einer ebenen Stirnfläche 36 zur Manometer-Schnittstelle 18 erstreckenden Durchbruch 38 auf. In der Drehstellung S1 des Manometerteils 16 ist der Durchbruch 38 mit dem Druckkanal 22 oder dem Entlüftungskanal 24 fluidleitend verbunden. Der Durchbruch 38 definiert somit in den jeweiligen Drehstellungen S1, S2 jeweils einen Abschnitt des Druckkanals 22 bzw. des Entlüftungskanals 24.

Aus Fig. 5b ist ersichtlich, dass der Entlüftungskanal 24 in der Bewegungsstellung S1 keine fluidleitende Verbindung zu der Manometer-Schnittstelle 18 hat. Ein dem Manometerteil zugewandtes Ende des Entlüftungskanals 24 endet in der Bewegungsstellung S1 im Bereich der Stirnfläche 36 am Einsteckende 32, an der der sich in Richtung der Manometer-Schnittstelle 18 erstreckende Durchbruch 38 ausmündet und welche eine Verschlussfläche 39 für den Entlüftungskanal 24 in der Bewegungsstellung S1 und für den Druckkanal 22 in der Bewegungsstellung S2 ausbildet.

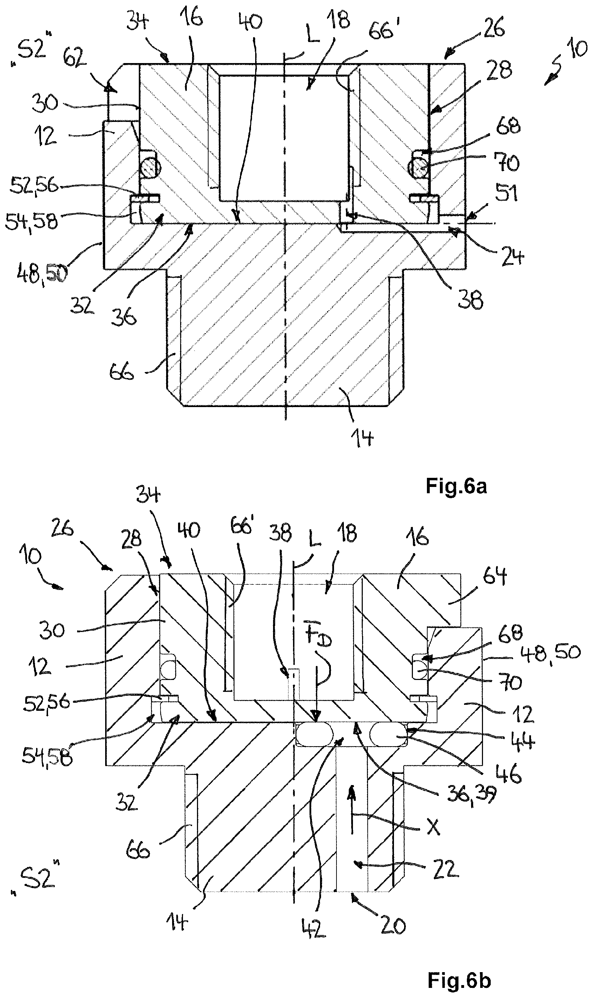

Die Schnittdarstellungen in Fig. 6a und 6b zeigen den Schnellentlüftungs-Adapter 10 in seiner zweiten Bewegungsstellung, insbesondere in der Drehstellung S2 und damit in der Entlüftungsstellung, in der eine fluidleitende Verbindung zwischen der Manometer-Schnittstelle 18 über den Durchbruch 38 im Manometerteil zum Entlüftungskanal 24 ausgebildet ist. Fig. 6b verdeutlicht, dass in der Bewegungsstellung S2 keine fluidleitende Verbindung zwischen der Manometer-Schnittstelle 18 und dem Druckkanal 22 vorliegt.

Die an der der Stirnfläche 36 ausgebildete Verschlussfläche 39 wird in der Bewegungsstellung S2 in einer durch den Druckkanal 22 am Anschlussteil 12 definierten Anströmrichtung X angeströmt. Erfindungsgemäß ist vorgesehen, dass das Manometerteil 16 entgegen der Anströmrichtung X am Anschlussteil 12 abgestützt und in einer Ebene in einem Winkel größer als 70° geneigt, in der vorliegend gezeigten Ausführung senkrecht, zur Anströmrichtung X bewegbar, vorliegend drehbar, am Anschlussteil 12 aufgenommen ist, um von der Bewegungsstellung S1 in die Bewegungsstellung S2 überführt zu werden.

Wie ferner Fig. 5a bis 6b zu entnehmen ist, hat die Aufnahme 28 einen ebenen Grund 40, an dem der Druckkanal 22 eine Mündung 42 aufweist. Im Bereich der Mündung 42 ist eine Vertiefung 44 für ein den Druckkanal 22 umgebendes Dichtelement 46 ausgebildet.

In der vorliegenden Ausführung ist das Dichtelement 46 ortsfest in der Vertiefung 44 am Grund 40 der Aufnahme 28 angeordnet und steht mit der Stirnfläche 36 am Einsteckende 32 des Manometerteils 16 in abdichtende Anlage. Dadurch ist ein Übertreten des Druckmediums vom Druckanal 22 in Richtung des Entlüftungskanals 24 vermieden und beim Bewegen des Manometerteils 16 entweder nur der Druckkanal 22 oder der Entlüftungskanal 24 freigegeben.

Wie Fig. 5a und 6b zeigen, verläuft der Druckkanal 22, wie auch der Durchbruch 38, parallel zu einer Längsachse L von Anschlussteil 12 und Manometerteil 16. Dabei sind der Drucckanal 22 und vorzugsweise auch der Durchbruch 38 radial versetzt zur Längsachse L und damit im Abstand zur Längsachse L des Anschlussteils 12 und des Manometerteils 16 angeordnet.

In der in Fig. 5b und 6a gezeigten Ausführung erstreckt sich der Entlüftungskanal 24 in radialer Richtung zur Längsachse L. Der Entlüftungskanal 24 weist an der äußeren Umfangsfläche 48 des Anschlussteils 12, welche vorliegend als Sechskant 50 und somit als Werkzeugansatz ausgebildet ist, einen Auslass 51 für das beim Entlüften darüber ausströmende Druckmedium in die Umgebung auf.

Am Einsteckende 32 des Manometerteils 16 ist ein Verrastelement 52 angeordnet und die Aufnahme 28 am Anschlussteil 12 weist nahe ihres Grunds 40 eine radiale Hinterschneidung 54 auf, wobei das Verrastelement 52 mit der Hinterschneidung 54 zusammenwirkt und dazu eingerichtet ist, das Manometerteil 16 innerhalb der Aufnahme 28 in axialer Richtung zu arretieren. Ferner weist der Anschlussstutzen 14 ein als Außengewinde ausgebildeten Gewindeabschnitt 66 und die Manometer-Schnittstelle 18 einen als Innengewinde ausgebildeten Gewindeabschnitt 66' auf. In einer möglichen Ausführung weist der Grundkörper 30 eine Ringnut 68 auf, innerhalb der eine Ringelement 70 zum verkantfreien Führen des Grundkörpers 30 innerhalb der Aufnahme 28 am Anschlussteil 12 angeordnet ist, wodurch das Bewegen, insbesondere Verdrehen, des Manometerteils 16 zum Anschlussteil mit geringem Kraftaufwand möglich ist.

In der in Fig. 5a - 6b gezeigten Ausführung ist das Verrastelement 52 als Sicherungsring 56 und die radiale Hinterschneidung 54 als vollständig umlaufende Umfangsnut 58 ausgebildet. Vorzugsweise wird mithilfe des Verrastelements 52 und der Hinterschneidung 54 an der Aufnahme 28 eine Haltekraft in axialer Richtung erzeugt, mittels derer zugleich eine Druckkraft F_{D} auf das in der Vertiefung 44 am Grund 40 der Aufnahme 28 angeordnete Dichtelement 46 zum Erzeugen der Abdichtwirkung mit dem damit zusammenwirkenden Einsteckende 32 des Manometerteils 16 wirkt.

Wie aus den Fig. 1 bis 4 ferner ersichtlich, weisen das Anschlussteil 12 und das Manometerteil 16 einander gegenseitig in den Verdrehweg des Manometerteils 16 vorstehende Anschläge 60, 60' auf. Mittels der Anschläge 60, 60' wird die Drehbewegung B beschränkt und die jeweilige erste und zweite Drehstellung S1, S2 definiert. Die Anschläge 60 am Manometerteil 12 sind mittels einer Materialausnehmung 62 und die Anschläge 60' am Manometerteil 16 sind mittels einer an dessen Grundkörper 30 radial nach außen vorstehenden Auskragung 64 ausgebildet.

Die Fig. 7a und 7b zeigen eine unter Druck stehende Armatur 100, insbesondere ein Feuerlöschanlagenventil 100', welche ein Gehäuse 102 und wenigstens einen nicht näher gezeigten Druckraum innerhalb des Gehäuses aufweist. Am Gehäuse 102 ist wenigstens einer, sind vorliegend zwei mit dem Druckraum fluidleitend verbundene Anschlüsse 104, 104' für ein daran montiertes Manometer 106 vorgesehen. Ferner weist die Armatur 100 ein mit dem Gehäuse 102 über dessen Anschlüsse 104, 104' fluidleitend verbundenes Manometer 106 auf. Im Verbindungsbereich zwischen den Anschlüssen 104, 104' und einem jeweils damit fluidleitend verbundenen Manometer 106 ist als eine Art Zwischenbauteil 108 ein erfindungsgemäßer Schnellentlüftungs-Adapter 10 angeordnet. Wie Fig. 7b verdeutlicht, befindet sich das obere der Manometer 106 mittels des Adapters 10 in der Druckübertragungsstellung und das untere der Manometer 106 ist durch Verdrehen um einen Drehwinkel α von etwa 90° in die Entlüftungsstellung überführt und damit drucklos gestellt.

In einer nicht näher gezeigten Ausführung ist der Schnellentlüftung-Adapter 10 auch weiterhin als Zwischenbauteil im Verbindungsbereich zwischen einem Anschluss 104, 104' und einem jeweils damit fluidleitend verbundenen Manometer 106 vorgesehen, wohingegen das Manometer 106 dann nicht mit einer zu den vorherigen Figuren näher beschriebenen Manometer-Schnittstelle 18 gekoppelt wird, sondern das Manometerteil 16 integral am bzw. einteilig mit dem Manometer 106 ausgebildet ist. Das im Anschlussteil 12 des Schnellentlüftungs-Adapters 10 bewegbare Manometerteil 16 ist dann insbesondere Teil des Manometers 106.

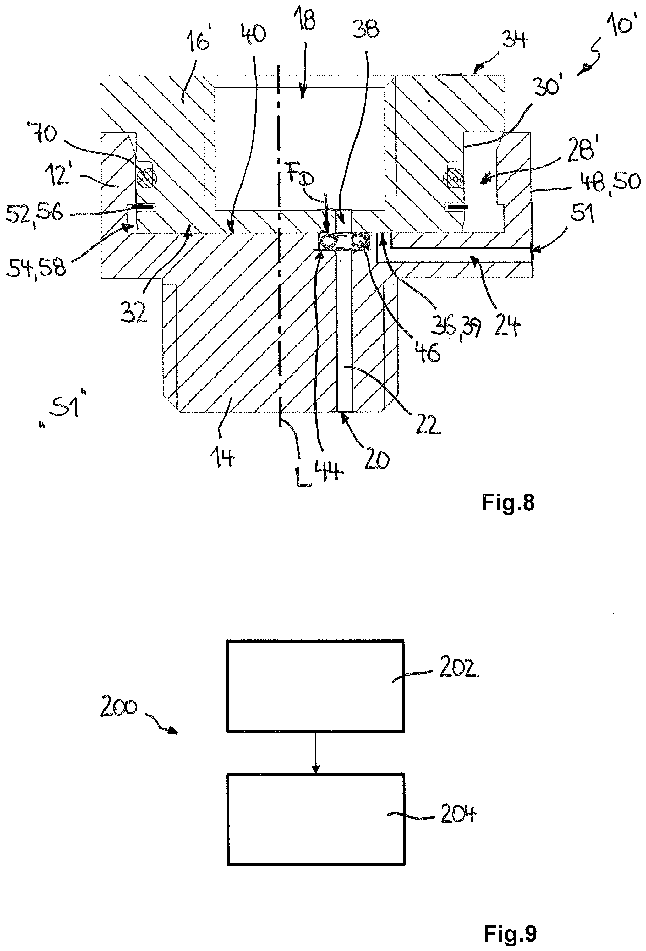

Fig. 8 zeigt eine Schnittdarstellung einer zweiten Ausführungsform eines erfindungsgemäßen Schnellentlüftungs-Adapters 10', der grundlegend ähnlich zu dem in den vorherigen Figuren gezeigten Schnellentlüftungs-Adapter 10 ausgebildet ist. Der Schnellentlüftungs-Adapter 10' weist ebenfalls ein Anschlussteil 12' mit einem Anschlussstutzen 14 zum fluidleitenden Verbinden mit einem unter Druck stehenden Bauteil, wie beispielsweise einer Armatur 100 auf. Der Anschlussstutzen 14 umfasst einen Druckeinlass 20. Am Anschlussteil 12 ist ein relativ zum Anschlussteil bewegbares Manometerteil 16' mit einer Manometer-Schnittstelle 18 zum fluidleitenden Koppeln mit einem Manometer 106 angeordnet. In einer nicht näher gezeigten Ausführung ist mit dem Manometerteil 16' statt der Manometer-Schnittstelle 18 ein daran einteilig ausgebildetes Manometer 106 vorgesehen

Auch der Adapter 10' weist zumindest einen sich vom Druckeinlass 20 in Richtung der Manometer-Schnittstelle 18 erstreckenden Druckkanal 22 und einen sich von der Manometer-Schnittstelle 18 zur Umgebung erstreckenden Entlüftungskanal 24 auf. Das Manometerteil 16 ist vorliegend dazu eingerichtet, zwischen einer ersten insbesondere in Fig. 8 gezeigten, den Druckkanal 22 freigebenden Bewegungsstellung S1 und einer zweiten, den Entlüftungskanal 24 freigebenden Bewegungsstellung S2 hin- und herbewegt zu werden.

Das Manometerteil 16 weist an seiner Stirnfläche 36 am Einsteckende 32 ebenfalls eine den Druckkanal 22 verschließende Verschlussfläche 39 auf, welche in der Bewegungsstellung S2 in einer durch den Druckkanal 22 am Anschlussteil definierten Anströmrichtung X angeströmt wird. In der zweiten Ausführungsform wird das Manometerteil 16 entgegen der Anströmrichtung X am Anschlussteil 12 abgestützt und ist in einer Ebene in einem Winkel größer als 70° geneigt, vorzugsweise senkrecht, zur Anströmrichtung X bewegbar am Anschlussteil 12 aufgenommen. Vorliegend ist das Manometerteil 16 verschiebbar am Anschlussteil 12, insbesondere an dessen Aufnahme 28' aufgenommen, wobei die Aufnahme 28 als ovale Ausnehmung ausgebildet ist.

Vorliegend hat das in der ovalen Aufnahme 28' am Anschlussteil 12 aufgenommene Einsteckende 32 des Manometerteils 16 einen korrespondierend zur Aufnahme 28' oval ausgebildeten Grundkörper 30'. Auch das Manometerteil 16 der in Fig. 8 gezeigten Ausführung weist einen sich vom Einsteckende 32 zur Manometer-Schnittstelle 18 erstreckenden Durchbruch 38 auf. In der in Fig. 8 gezeigten Bewegungsstellung S1 ist der Durchbruch fluidleitend mit dem Druckkanal 22 verbunden. Mit insbesondere dem Verschieben des Manometerteils 16 innerhalb der Aufnahme 28' wird die fluidleitende Verbindung zum Druckkanal 22 unterbrochen und die fluidleitende Verbindung zwischen dem Durchbruch 38 und dem Entlüftungskanal 24 hergestellt.

Ferner ist, wie Fig. 8 zeigt, am Einsteckende 32 des Manometerteils 16 ein Verrastelement 52 angeordnet und die Aufnahme 28 am Anschlussteil 12 weist nahe ihres Grunds 40 eine radiale Hinterschneidung 54 auf. Das Verrastelement 52 wirkt mit der Hinterschneidung 54 zusammen und ist dazu eingerichtet, das Manometerteil 16 innerhalb der Aufnahme 28 in axialer Richtung zu arretieren. Ferner weist der Anschlussstutzen 14 ein als Außengewinde ausgebildeten Gewindeabschnitt 66 und die Manometer-Schnittstelle 18 einen als Innengewinde ausgebildeten Gewindeabschnitt 66' auf. In einer möglichen Ausführung weist der Grundkörper 30 eine Ringnut 68 auf, innerhalb der eine Ringelement 70 zum verkantfreien Führen des Grundkörpers 30 innerhalb der Aufnahme 28 am Anschlussteil 12 angeordnet ist, wodurch das Bewegen, insbesondere Verdrehen, des Manometerteils 16 zum Anschlussteil mit geringem Kraftaufwand möglich ist.

Das Verrastelement 52 ist als Sicherungsring 56 und die radiale Hinterschneidung 54 als vollständig umlaufende Umfangsnut 58 ausgebildet. Vorzugsweise wird mithilfe des Verrastelements 52 und der Hinterschneidung 54 an der Aufnahme 28 eine Haltekraft in axialer Richtung erzeugt, mittels derer zugleich eine Druckkraft F_{D} auf das in der Vertiefung 44 am Grund 40 der Aufnahme 28 angeordnete Dichtelement 46 zum Erzeugen der Abdichtwirkung mit dem damit zusammenwirkenden Einsteckende 32 des Manometerteils 16 wirkt.

In Fig. 9 ist ein erfindungsgemäßes Verfahren 200 zum Entlüften eines an einer Armatur 100 angeordneten Manometers 106 unter Verwendung eines Schnellentlüftungs-Adapters 10 gezeigt. Das Verfahren 200 umfasst zumindest einen ersten Schritt 202, betreffend das Bereitstellen bzw. Montieren eines Manometers 106 an einer unter Druck stehenden Armatur 100 und Herstellen einer fluidleitenden Verbindung zwischen der Armatur 100 und dem Manometer 106 in einer ersten Drehstellung S1 des Manometers 106 relativ zur Armatur 100. Das Verfahren 200 umfasst ferner einen zweiten Schritt 204, betreffend das Bewegen des Manometers 106 , insbesondere Verdrehen oder Verschieben des Manometers (106), in einer Ebene in einem Winkel größer als 70° geneigt, vorzugsweise senkrecht, zu einer durch einen Druckkanal am Schnellentlüftungs-Adapters (10) definierten Anströmrichtung (X) von der ersten, eine Druckübertragungsstellung definierenden Bewegungsstellung S1 in eine zweite, eine Entlüftungsstellung definierenden Bewegungsstellung S2, in der die Drückübertragung in Richtung des Manometers 106 unterbrochen und die Entlüftung in die Umgebung freigegeben ist.

Bevorzugt wird das Manometerteil zum Überführen desselbigen von der Bewegungsstellung S1 in die Bewegungsstellung S2 in der speziell zur Anströmrichtung X definierten Ebene gedreht oder verschoben.

Gleich oder ähnliche Bauteile sind mit denselben Bezugszeichen versehen.

### Bezugszeichenliste:

- 10, 10': Schnellentlüftungs-Adapter
- 12, 12': Anschlussteil
- 14: Anschlussstutzen
- 16, 16': Manometerteil
- 18: Manometer-Schnittstelle
- 20: Druckeinlass
- 22: Druckkanal
- 24: Entlüftungskanal
- 26: Ende
- 28, 28': Aufnahme
- 30, 30': Grundkörper
- 32: Einsteckende
- 34: Ende
- 36: Stirnfläche
- 38: Durchbruch
- 39: Verschlussfläche
- 40: Grund
- 42: Mündung
- 44: Vertiefung
- 46: Dichtelement
- 48: Umfangsfläche
- 50: Sechskant
- 51: Auslass
- 52: Verrastelement
- 54: Hinterschneidung
- 56: Sicherungsring
- 58: Umfangsnut
- 60, 60': Anschlag
- 62: Materialausnehmung
- 64: Auskragung
- 66, 66': Gewindeabschnitt
- 68: Ringnut
- 70: Ringelement
- 100: Armatur
- 100': Feuerlöschanlagenventil
- 102: Gehäuse
- 104, 104': Druckanschluss
- 106: Manometer
- 108: Zwischenbauteil
- 200: Verfahren
- 202: Bereitstellen bzw. Montieren
- 204: Bewegen Manometer
- α: Drehwinkel
- β1, β2: Winkelbereich
- B: Drehbewegung
- F_{D}: Druckkraft
- L: Längsachse
- S1: erste Drehstellung
- S2: zweite Drehstellung
- S_{Z}: Zwischenstellungsbereich

## Patentansprüche

1. Schnellentlüftungs-Adapter (10, 10') zum Testen der Funktionsfähigkeit eines Manometers (106), aufweisend
- ein Anschlussteil (12, 12') mit einem Anschlussstutzen (14) zum fluidleitenden Verbinden mit einem unter Druck stehenden Bauteil, wobei der Anschlussstutzen (14) einen Druckeinlass (20) aufweist, und
- ein am Anschlussteil (12, 12') angeordnetes und relativ zum Anschlussteil (12, 12') bewegbares Manometerteil (16, 16') mit einer Manometer-Schnittstelle (18) zum fluidleitenden Koppeln mit einem Manometer (106),
wobei der Adapter (10, 10') zumindest einen sich vom Druckeinlass (20) in Richtung der Manometer-Schnittstelle (18) erstreckenden Druckkanal (22) und einen sich von der Manometer-Schnittstelle (18) zur Umgebung erstreckenden Entlüftungskanal (24) aufweist, wobei das Manometerteil (16, 16') dazu eingerichtet ist, zwischen einer ersten, den Drucckanal (22) freigebenden Bewegungsstellung (S1) und einer zweiten, den Entlüftungskanal (24) freigebenden Bewegungsstellung (S2) hin- und herbewegt zu werden,
wobei das Manometerteil (16, 16') eine den Druckkanal (22) verschließende Verschlussfläche (39) aufweist, welche in der Bewegungsstellung (S2) in einer durch den Druckkanal (22) am Anschlussteil (12, 12') definierten Anströmrichtung (X) angeströmt wird, und wobei das Manometerteil (16, 16') entgegen der Anströmrichtung (X) am Anschlussteil (12, 12') abgestützt und in einer Ebene in einem Winkel größer als 70° geneigt, vorzugsweise senkrecht, zur Anströmrichtung (X) bewegbar am Anschlussteil (12, 12') aufgenommen ist.

2. Schnellentlüftungs-Adapter (10, 10') nach Anspruch 1,
**dadurch gekennzeichnet, dass** die erste Bewegungsstellung (S1) eine Druckübertragungsstellung definiert, und die zweite Bewegungsstellung (S2) eine Entlüftungsstellung definiert, wobei das Manometerteil (16, 16') dazu eingerichtet ist, in der Druckübertragungsstellung ausschließlich den Druckkanal (22) freizugeben, und in der Entlüftungsstellung ausschließlich den Entlüftungskanal (24) freizugegeben.

3. Schnellentlüftungs-Adapter (10, 10') nach Anspruch 1 oder 2,
**dadurch gekennzeichnet, dass** das Manometerteil (16, 16') zwischen der ersten und zweiten Bewegungsstellung (S1, S2) einen Zwischenstellungsbereich (S_{Z}) aufweist, in welchem sowohl der Druckkanal (22) als auch der Entlüftungskanal (24) gesperrt sind.

4. Schnellentlüftungs-Adapter (10, 10') nach einem der Ansprüche 1 bis 3,
**dadurch gekennzeichnet, dass** das Manometerteil (16, 16') dreh- oder schiebbar am Anschlussteil (12, 12') aufgenommen ist.

5. Schnellentlüftungs-Adapter (10, 10') nach einem der vorstehenden Ansprüche, **dadurch gekennzeichnet, dass** das Anschlussteil (12, 12') an einem zum Anschlussstutzen (14) entgegengesetzten Ende (26) eine Aufnahme (28, 28') für das Manometerteil (16, 16') aufweist, welche vorzugsweise als zylindrische oder ovale Ausnehmung ausgebildet ist.

6. Schnellentlüftungs-Adapter (10, 10') nach einem der vorstehenden Ansprüche, **dadurch gekennzeichnet**, das Manometerteil (16, 16') einen zylindrischen oder ovalen Grundkörper (30, 30') mit einem am Anschlussteil (12, 12') dreh- oder schiebbar aufgenommenen Einsteckende (32) aufweist, wobei vorzugsweise die Manometer-Schnittstelle (18) an einem zum Einsteckende (32) entgegengesetzt angeordneten Ende (34) ausgebildet ist.

7. Schnellentlüftungs-Adapter (10, 10') nach Anspruch 6,
**dadurch gekennzeichnet, dass** das Manometerteil (16, 16') einen sich vom Einsteckende (32) zur Manometer-Schnittstelle (18) erstreckenden Durchbruch (38) aufweist, der in Abhängigkeit von der jeweiligen Bewegungsstellung (S1, S2) des Manometerteils (16, 16') mit dem Druckkanal (22) oder mit dem Entlüftungskanal (24) fluidleitend verbunden ist.

8. Schnellentlüftungs-Adapter (10, 10') nach einem der vorstehenden Ansprüche, **dadurch gekennzeichnet, dass** der Druckkanal (22), vorzugsweise der Durchbruch (38), sich parallel zur Längsachse (L) von Anschlussteil (12, 12') und Manometerteil (16, 16') erstrecken.

9. Schnellentlüftungs-Adapter (10) nach einem der Ansprüche 5 bis 8,
**dadurch gekennzeichnet, dass** die Aufnahme (28, 28') einen ebenen Grund (40) aufweist, wobei der Druckkanal (22) am Grund (40) der Aufnahme (28, 28') mündet, und wobei die Mündung (42) von einem mit dem Einsteckende (32) des Manometerteils (16, 16') zusammenwirkenden Dichtelement (46) umgeben ist.

10. Schnellentlüftungs-Adapter (10, 10') nach einem der vorstehenden Ansprüche, **dadurch gekennzeichnet, dass** der Druckkanal (22), vorzugsweise der Durchbruch (24), radial versetzt zur Längsachse (L) von Anschlussteil (12, 12') bzw. Manometerteil (16, 16') angeordnet sind,
und/oder
dass der Entlüftungskanal (24) am Anschlussteil (12, 12') sich in radialer Richtung zur Längsachse (L) erstreckt.

11. Schnellentlüftungs-Adapter (10, 10') nach einem der Ansprüche 5 bis 10,
**dadurch gekennzeichnet, dass** am Einsteckende (32) ein Verrastelement (52) angeordnet ist, und wobei die Aufnahme (28, 28') eine radiale Hinterschneidung (54) aufweist, die mit dem Verrastelement (52) zusammenwirkt, welches dazu eingerichtet ist, das Manometerteil (16, 16') innerhalb der Aufnahme (28, 28') in axialer Richtung zu arretieren.

12. Schnellentlüftungs-Adapter (10, 10') nach einem der vorstehenden Ansprüche, **dadurch gekennzeichnet, dass** am Anschlussteil (12, 12') und am Manometerteil (16, 16') einander gegenseitig in den Verstellweg des Manometerteils (16, 16') vorstehende Anschläge (60, 60') zur Definition der ersten und zweiten Bewegungsstellung (S1, S2) des Manometerteils (16, 16') ausgebildet sind.

13. Schnellentlüftungs-Adapter (10, 10') nach einem der vorstehenden Ansprüche, **dadurch gekennzeichnet, dass** das Manometerteil (16, 16') eine Handhabe zum Bewegen des Manometerteils (16, 16') zwischen der ersten und zweiten Bewegungsstellung (S1, S2) aufweist.

14. Schnellentlüftungs-Adapter (10, 10') zum Testen der Funktionsfähigkeit eines Manometers (106), aufweisend
- ein Anschlussteil (12, 12') mit einem Anschlussstutzen (14) zum fluidleitenden Verbinden mit einem unter Druck stehenden Bauteil, wobei der Anschlussstutzen (14) einen Druckeinlass (20) aufweist, und
- ein am Anschlussteil (12, 12') angeordnetes und relativ zum Anschlussteil (12, 12') bewegbares Manometerteil (16, 16') mit einem Manometer (106),
wobei der Adapter (10, 10') zumindest einen sich vom Druckeinlass (20) in Richtung des Manometers (106) erstreckenden Druckkanal (22) und einen sich vom Manometer (106) zur Umgebung erstreckenden Entlüftungskanal (24) aufweist,
wobei das Manometerteil (16, 16') dazu eingerichtet ist, zwischen einer ersten, den Drucckanal (22) freigebenden Bewegungsstellung (S1) und einer zweiten, den Entlüftungskanal (24) freigebenden Bewegungsstellung (S2) hin- und herbewegt zu werden,
wobei das Manometerteil (16, 16') in der Bewegungsstellung (S2) eine den Druckkanal (22) verschließende Verschlussfläche (39) aufweist, welche in einer durch den Druckkanal (22) am Anschlussteil (12, 12') definierenden Anströmrichtung (X) angeströmt wird, und wobei das Manometerteil (16, 16') entgegen der Anströmrichtung (X) am Anschlussteil (12, 12') abgestützt und in einer Ebene in einem Winkel von größer als 70° geneigt, vorzugsweise senkrecht, zur Anströmrichtung (X) bewegbar am Anschlussteil (12, 12') aufgenommen ist.

15. Schnellentlüftungs-Adapter (10, 10') nach Anspruch 14,
**dadurch gekennzeichnet, dass** das Manometer (106) integral mit dem Manometerteil (16, 16') ausgebildet oder Teil des Manometerteils (16, 16') ist,
und/oder dass der Adapter gemäß mindestens eines Merkmals der Ansprüche 2 bis 6 und 8 bis 13 ausgebildet ist.

16. Armatur (100), insbesondere Feuerlöschanlagenventil (100'), mit
- einem Gehäuse (102) und wenigstens einem Druckraum innerhalb des Gehäuses (102), wobei das Gehäuse (102) wenigstens einen mit dem Druckraum fluidleitend verbundenen Druckanschluss (104, 104') für ein Manometer (106) aufweist, und
- einem mit dem Gehäuse (102) über dessen Druckanschluss (104, 104') fluidleitend verbundenen Manometer (106),
**dadurch gekennzeichnet, dass** in einem Verbindungsbereich zwischen dem Druckanschluss (104, 104') und dem Manometer (106) ein Schnellentlüftungs-Adapter (10) gemäß einer der Ansprüche 1 bis 13 oder an dem Druckanschluss (104, 104') ein Schnellentlüftungsadapter (10') nach Anspruch 14 oder 15 angeordnet ist.

17. Verfahren (200) zum Entlüften eines an einer Armatur (100) angeordneten Manometers (106) unter Verwendung eines Schnellentlüftungs-Adapters (10, 10'), insbesondere eines Schnellentlüftungs-Adapters (10, 10') nach einem der Ansprüche 1 bis 13 oder nach Anspruch 14 oder 15, mit den Schritten:
- (202) Bereitstellen bzw. Montieren eines Manometers (106) an einer unter Druck stehenden Armatur (100) und Herstellen einer fluidleitenden Verbindung zwischen der Armatur (100) und dem Manometer (106) in einer ersten Bewegungsstellung (S1) des Manometers (106) relativ zur Armatur (100), und
- (204) Bewegen des Manometers (106), insbesondere Verdrehen oder Verschieben des Manometers (106), in einer Ebene in einem Winkel größer als 70° geneigt, vorzugsweise senkrecht, zu einer durch einen Druckkanal am Schnellentlüftungs-Adapters (10, 10') definierten Anströmrichtung (X) von der ersten eine Druckübertragungsstellung definieren Bewegungsstellung (S1) in eine zweite eine Entlüftungsstellung definierenden Bewegungsstellung (S2), in der die Druckübertragung in Richtung des Manometers (106) unterbrochen und die Entlüftung in die Umgebung freigegeben wird.
